# EUROPEAN PATENT SPECIFICATION

(11) **EP 2 182 753 B1**
(45) Date of publication and mention of the grant of the patent: **20.03.2013**
(21) Application number: 07855768.3
(22) Date of filing: 25.12.2007
(51) Int. Cl.: H04W 24/02

(54) **A METHOD FOR HOME NODE B AUTOMATIC INSTALLATION**
VERFAHREN ZUR AUTOMATISCHEN INSTALLATION DES HEIMATKNOTENS B
PROCEDE D'INSTALLATION AUTOMATIQUE D'UN NOEUD B DOMESTIQUE

(30) Priority: 07.08.2007 CN 200710143541
(43) Date of publication of application: 05.05.2010
(73) Proprietor: ZTE Corporation, Shenzhen, Guangdong 518057 (CN)
(72) Inventor: JIANG, Xin, Nanshan District, Shenzhen City, Guangdong 518057 (CN); FANG, Yadong, Nanshan District, Shenzhen City, Guangdong 518057 (CN); CHEN, Dong, Nanshan District, Shenzhen City, Guangdong 518057 (CN); ZHANG, Kai, Nanshan District, Shenzhen City, Guangdong 518057 (CN)
(74) Representative: Pallini, Diego
(86) International application number: PCT/CN2007/003762
(87) International publication number: WO 2009/018696

(56) References cited:
- EP-A1- 1 775 976
- CN-A- 1 311 966
- CN-A- 1 558 697
- JP-A- 2001 197 557
- US-A1- 2007 105 527
- "3rd Generation Partnership Project; Technical Specification Group Services and System Aspects; Telecommunication management; Study of Self-Organising Networks (SON) related OAM Interfaces for Home NodeB (Release 8)", 3GPP STANDARD; 3GPP TR 32.821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 16 July 2007 (2007-07-16), pages 1-14, XP050400355, [retrieved on 2007-07-16]
- HUAWEI: "Proposal on Self-Installation & Self-Configuration for Home NodeB", 3GPP DRAFT; R3-071245 PROPOSAL ON SELF-INSTALLATION & SELF-CONFIGURATION FOR HOME NODEB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Sophia; 20070608, 8 June 2007 (2007-06-08), XP050020536, [retrieved on 2007-06-08]

## Description

### Technical Field

The present invention relates to the communication field, and more specifically, to a method for automatically installing home NodeB in the home Node-B network.

### Background of the Related Art

Indoor coverage has the highest priority in 3G network construction, and a suitable indoor coverage scheme can make the network play its role to the most extend on the one hand so as to create more profit for the operators, and save a lot of network construction cost for the operators on the other hand so as to realize low input with a high payback. Meanwhile, more and more international operators hope there is an All in One radio access scheme, that is, a radio access equipment which can offer all kinds of radio access functions, and the operators can offer favorable price for the users who use the equipment at home, and on the basis of this requirement, a radio access equipment, called as the Home NodeB, is offered. Home NodeB scheme is designed according to the characteristics of indoor home communication, and this scheme implements the indoor coverage with a family as a unit by the Home NodeB equipment in the user's home and achieves the indoor broadband applications by making use of the multivariate terminals such as cell phones, PCs, and so on. As a creative local hotspot access solution, Home NodeB skillfully combines the fixed network and mobile network in the local hotspot (such as home) and fully uses the advantages of fixation and mobility to meet the users and operators' requirements.

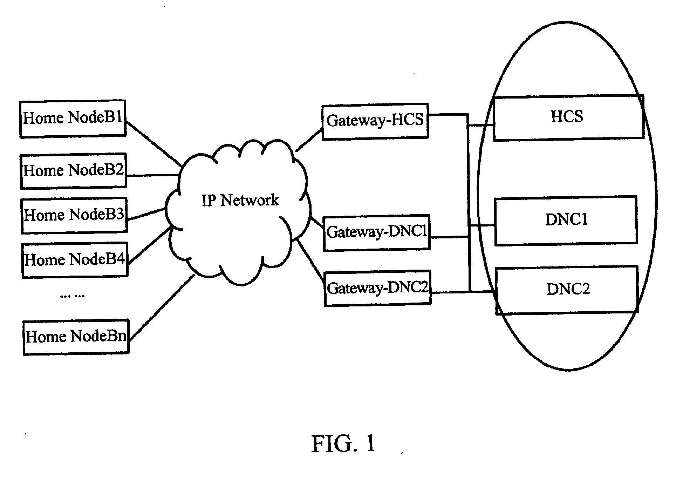

FIG. 1 is a schematic illustration of the Home NodeB network structure. The Home NodeB network comprises the Home NodeB, Domestic Network Controller (DNC) and Home NodeB configuration Server (HCS). The function of DNC is similar to the radio network controller (RNC) and it also needs to support the specific function of Home NodeB. Home NodeB is an equipment at the user terminal and the configuration of the home NodeB needs to be maintained at the operators" network side, and the corresponding configuration server is called as HCS which offers configuration for Home NodeB and offers configuration related to the Home NodeB for the DNC as well. Home NodeB connects to the operators' network side through the IP network, and the HCS and DNC at the operators' network side connect to the IP network through the gateway.

The conventional NodeB is deployed by the operators, and the network is planned and optimized before installation, moreover, the NodeB equipment is complicated, thus it should be manually configured by the professionals during the installation; However, Home NodeB equipment is mainly located in users' home, and it has the following features:
1. Having relatively simple functions and configuration, and the functions being almost the same;
2. Having a large number, thus the operators hoping that they can be installed by unprofessional users themselves since manual installation and configuration by the operators will significantly increase the expense;
3. Connecting to the operator's network through the IP network, thus enough security should be provided;
4. In order to use the equipment and resources, such as the DNC, effectively, and share the payload, the network planning should be introduced, however, the place and time of Home NodeB's installation cannot be predetermined or limited, therefore, the network planning is relatively difficult;
5. Network optimization is an important process in the NodeB installation: NodeB is a radio equipment which needs to be optimally configured according to specific raido environment to achieves the optimal performance and to reduce interrupt to the surrounding radio environment as well. However, since the operators cannot determine the time of Home NodeB installation in advance, nor can bound the place of installation, the network optimization cannot be implemented in advance.

Therefore, based on the aforementioned features of Home NodeB, the conventional method for installation of home NodeB has the shortcomings of complicated operation, the low efficiency and waste of human resource, moreover, it is almost impossible to implement the network planning and optimization before the installation.

### Content of the Invention

According to the present invention there is provided a method for automatic installation of a Home NodeB as defined in appended claim 1. Preferred features are set out in claims 2-9.

The present invention offers a method for automatic installation of a Home NodeB to make the Home NodeB be able to implement automatic installation and configuration based on the Home NodeB network with no need of network planning and optimization in advance, thus avoid the shortcoming that it should be manually configured by the professionals during the installation.

In order to solve the above problem, the present invention offers a method for Home NodeB automatic installation, and the method comprises the following steps of:
(1) registering the Home NodeB on a Home NodeB Configuration Server (HCS), and the HCS storing registration information of the Home NodeB;
(2) after powered on, the Home NodeB requesting configuration from the HCS, and the HCS allocating resources to the Home NodeB after determining that the Home NodeB is authorized according to said registration information, and said resources comprise a latest suitable software for the Home NodeB and a Domestic Network Controller (DNC);
(3) after the Home NodeB updates an operating software according to said latest software, the Home NodeB synchronizing with a time source, afterwards, Home NodeB connecting to the allocated DNC, the DNC obtaining authentication information from the HCS after authenticating the Home NodeB according to said authentication information, and then allocating service resources to the Home NodeB according to said service control information; and
(4) the Home NodeB detecting surrounding radio environment, obtaining surrounding radio environment information and reporting said information to said DNC,

The document "3rd Generation Partnership Project; Technical Specification Group Services and System Aspects; Telecommunication management; Study of Self-Organising Networks (SON) related OAM Interfaces for Home NodeB (Release 8)" discloses a method for managing Home NodeB with an OAM network which realizes centralized management of Home NodeB. However, applied to the Home NodeB network in Fig.1, this method cannot use the equipment and resources, such as the DNC effectively, or share the payload.

and the DNC configuring parameters for the Home NodeB according to said information;
characterized in that said allocating resources to the Home NodeB in the step (2) comprises: presetting multiple DNCs capable of providing services for the Home NodeB in the HCS, and setting a maximum load capacity and an alarming threshold for each DNC.

Furthermore, ways of registering Home NodeB in the step (1) is one of the following:
way 1: an operator configuring initialization data for the Home NodeB in the HCS, and said initialization data as the registration information being stored in the HCS;
way 2: the registration information being provided by a subscriber, and after said registration information being authenticated by the operator, the registration information being stored in the HCS;
wherein, the registration information comprises an equipment number and key of the Home NodeB.

Furthermore, said allocating resources to the Home NodeB in the step (2) further comprises: if the HCS does not preset the DNC for the Home NodeB, then the HCS counting the number of Home NodeBs allocated to each DNC, and meanwhile obtaining from each DNC a load thereof, and finding a DNC whose load does not exceed the capacity and is minimum, and allocating said DNC to the Home NodeB.

Furthermore, said allocating resources to the Home NodeB in the step (2) further comprises: if the loads of all DNCs reach maximum capacities, then the HCS stopping allocating the DNC and denying the Home NodeB accessing a service network.

Furthermore, said resources in the step (2) further comprise a network element management system; and correspondingly,
the step (3) further comprises: the network element management system notifying the Home NodeB of an internet protocol address of the network element management system, and the Home NodeB notifying said network element management system of parameters of the Home NodeB, and said parameters comprising: an equipment number and/or an IP address of the Home NodeB.

Furthermore, said surrounding radio environment information in the step (4) comprises: a combination of any one or more of a scrambler frequency point, signal strength, and cell signal of an adjacent cell, and said parameters comprise: a combination of any one or more of a frequency point, scrambler, power, information of an adjacent cells.

Furthermore, the step (4) further comprises: the DNC reporting the configured parameters to the HCS.

Furthermore, said method further comprising the following step of:
(5) the HCS collecting and storing subscriber information of the Home NodeB.

Furthermore, said subscriber information comprises an IP address and/or macro-cell of the Home NodeB.

The present invention has the following main features:
(1) the Home NodeB can be powered on and updated automatically;
(2) resources, such as the DNC, FTP server, connection bandwidth that need to connect, can be allocated to the Home NodeB according to the strategy;
(3) network can be optimized according to the surrounding radio environment during the installation and reducing interruption to the surroundings on the premise of maintaining relatively high performance;
(4) subscriber information can be collected according to the needs of the operator;
(5) Home NodeB data in HCS can be deleted after authorized by the operator and the Home NodeB can be reinstalled (automatically) after the Home NodeB is repowered on;
(6) the procedures and work for installing the Home NodeB for the subscribers are simplified;
(7) the work for installing, planning and optimizing the Home NodeB for the operators is simplified.

All in all, in the mobile communication networks using Home NodeB, with the method for automatic installation of Home NodeB offered in the present invention to install the Home NodeB, the Home NodeB installation can be largely simplified, the Home NodeB deployment is speeded up, the operator cost is reduced and the user satisfaction is improved.

### Brief Description of Drawings

FIG. 1 is a schematic illustration of the Home NodeB network structure;
FIG. 2 is a flow chart of the method for automatically installing Home NodeB in accordance with an embodiment of the present invention.

### Preferred Embodiments of the Present Invention

The method for automatic installation of Home NodeB in accordance with the present invention is based on Home NodeB network, and it implements the automatic installation of Home NodeB by applying to the Home NodeB Configuration Server (HCS) at the operator's network side for resources, and the Home NodeB automatically detects the surrounding radio environment during the installation, thus reasonably configure the parameters.

The preferred embodiments of the present invention will be described in further detail in conjunction with the accompanying figures.

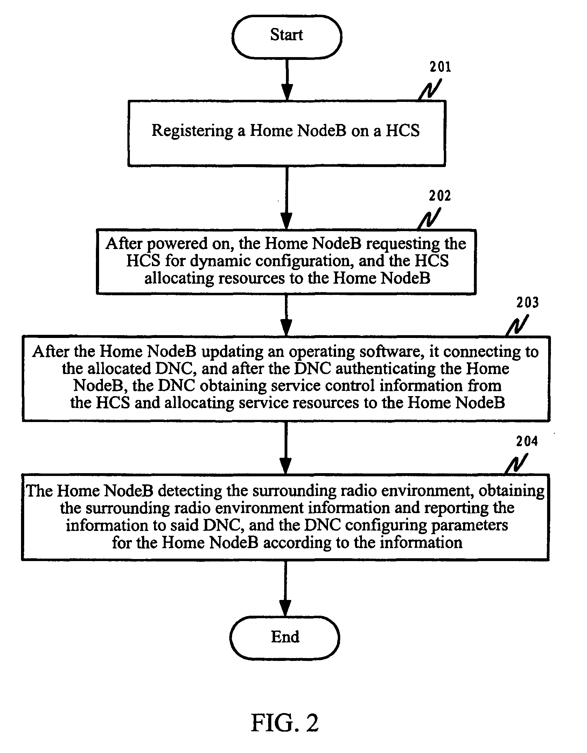

FIG. 2 is a flow chart of the method for automatic installation of Home NodeB in accordance with the preferred embodiment of the present invention. The installation method comprises the following steps of:

S201: registering the Home NodeB on the HCS which stores the registration information of the Home NodeB;

In order to improve the security, the Home NodeB should be registered on the HCS in advance before the installation, otherwise, the HCS denies offering it services, and the registration information should comprise the static data of the Home NodeB, such as the equipment ID, key, and so on;

S202: after powering on, the Home NodeB requesting the HCS for configuration, and the HCS allocating resources to the Home NodeB after determining that the HCS is authorized according to the registration information, and said resource comprising the latest suitable software for the Home NodeB and the DNC;

S203: the Home NodeB updating the operating software according to said latest software, then connecting to the allocated DNC, and the DNC obtaining the authentication information from the HCS and authenticating the Home NodeB according to said authentication information, and obtaining the service control information from the HCS, and allocating service resources to the Home NodeB;

S204: the Home NodeB detecting the surrounding radio environment and obtaining and reporting the surrounding radio environment information to said DNC, and the DNC configuring parameters for the Home NodeB according to said information.

The above preferred embodiment will be described in further detail in the following:

Before the installation, it needs to register the Home NodeB information on the HCS, and the registration method can be one of the following two methods:

Method 1: before installing the Home NodeB, the operator can configure initialization data for the Home NodeB in the HCS, and said initialization data is as the registration information stored in the HCS;

Method 2: the user registers the Home NodeB bought by the user in the web page offered by the operator, during which the user should offer some necessary information, such as Home NodeB equipment ID, key, and so on. The content input through the web page can be stored in the HCS after it is authenticated by the operator.

The installation steps after the registration will be described in detail in the following:

Step 1: after powered on, the Home NodeB connects to the HCS to request dynamic configuration and resource allocation;

After the Home NodeB at the user terminal is powered on, it sends configuration and software request to the HCS. Meanwhile, the HCS will authenticate whether the Home NodeB is authorized according to the registration information. If it is not, directly deny the request; otherwise, offer static and dynamic configurations to the Home NodeB, including offering the latest suitable software to the Home NodeB, and allocating EMS and DNC to the Home NodeB according to a certain strategy.

Wherein, the strategy of allocating DNC is: the operator should set some DNCs which could offer services to the Home NodeB in the HCS in advance, and since each DNC has different capacity, the maximum payload capacity and alarming threshold should be set for each DNC respectively. If the operator has set a specific DNC for the Home NodeB in the HCS, the HCS allocates the DNC to the Home NodeB; if the HCS does not set a DNC for the Home NodeB, the HCS collects the number of Home NodeBs allocated to each DNC, and meanwhile, obtains the payload of each DNC to find out and allocates the DNC whose payload does not exceed the capacity and is minimal to the Home NodeB. Moreover, if the current DNC resource reaches the alarming threshold, the HCS will notify the operator. If the DNC resource is full, it should stop allocating the DNC to THE Home NodeB and deny the Home NodeB accessing to the service network, and meanwhile, generate and notify an alarm to the operator.

The second step: the Home NodeB uses the resources offered by the HCS to implement software installation, time setting, and the like work;

The Home NodeB judges whether it needs to download software version (such as comparing the version number, and if the version number is larger than the one operating in the Home NodeB, it means that the software should be updated) according to a certain strategy, and if yes, it downloads the latest software from the version server offered by the HCS. In addition, the Home NodeB should synchronize with the time source.

The third step: install the Home NodeB in the Element Management System (EMS);

When the Home NodeB obtains configuration from the HCS, the configuration information comprises the IP information of EMS. Afterwards, the Home NodeB actively notifies the EMS about its IP information (VPN IP) so as to make the EMS visit the Home NodeB. The EMS stores the necessary information of the Home NodeB, such as the equipment ID and IP address of the Home NodeB. Afterwards, the EMS can access the data such as the configuration and performance of Home NodeB.

The fourth step: installing the configuration data on the DNC side;

The Home NodeB connects to the DNC allocated by the HCS, and the DNC does not have the data of Home NodeB at that time. Therefore, the DNC should obtain configuration related to the Home NodeB from the HCS. As far as the security is concerned, the DNC authenticates the Home NodeB, and the authentication information of DNC comes from the HCS. In addition, the data related to the service control needed by the DNC also comes from the HCS. After the DNC authenticates the Home NodeB, it allocates service resource to the Home NodeB according to the service control information. The authentication method is as follows: if there is data of the Home NodeB in the HCS, the DNC allows the connection of Home NodeB to it and allocates resource for the Home NodeB, such as the necessary transmission resource, resources in the cell, and so on.

The fifth step: installing the configuration such as radio and power for the Home NodeB;

The deployment time and place of the Home NodeB are generally difficult to decide or confine by the operator, thus the radio environment in which the Home NodeB is located cannot be predicted, so the radio parameters initially allocated to the Home NodeB are not the most suitable ones for the Home NodeB generally. When started, the Home NodeB actively detects the surrounding radio environment, such as the scrambler, frequency point, signal strength, cell number of the adjacent cells, and so on. The Home NodeB reports this information to the DNC, and the DNC automatically allocates the information of frequency point, scrambler, suitable power and adjacent cells to the Home NodeB according to the information reported by the Home NodeB. In addition, the DNC offers the information to the HCS which stores the optimized parameters, and afterwards, at each time that the Home NodeB is reset, the HCS offers these optimized data to the Home NodeB.

Thus the installation of the radio and power configuration for the Home NodeB is complete.

The sixth step: the Home NodeB registers necessary information on the configuration server;

Before the installation is completed, the HCS collects some user information of the Home NodeB according to the operator's strategy, and the strategy can be made according to different needs, such as collecting the IP of user's Home NodeB, detecting the micro-cell, and so on, and this information is stored in the HCS to meet the operator's demand.

The method for automatic installation of Home NodeB has small cost, high efficiency, and relatively small influence and change for the current architecture, but more adaptive to the development tendency and feature of the current communication management system, and it is a technical scheme which has very high performance/price ratio.

Of course that the present invention may have several other embodiments and those skilled in the art can make all kinds of modification or variations which all should belong to the scope of the claims of the present invention.

### Industrial Applicability

The present invention offers a method for automatic installation of Home NodeB, and the method can power on and upgrade the Home NodeB automatically, allocate resources to the Home NodeB according to the strategy, automatically optimize the network according to the surrounding radio environment in the installation process and reduce interrupt to the surroundings on the premise of maintaining relatively high performance. The present invention has relatively small influence and modification for the current architecture and is more adaptive to the development tendency and features of the current communication management system, and it has high performance-price ratio.

## Claims

1. A method for automatic installation of a Home NodeB, the method comprising the following steps:
(1) registering the Home NodeB on a Home NodeB Configuration Server HCS, and the HCS storing registration information of the Home NodeB (201);
(2) after powered on, the Home NodeB requesting configuration from the HCS, the HCS allocating resources to the Home NodeB after determining that the Home NodeB is authorized according to said registration information, and said resources comprising a latest suitable software for the Home NodeB and a Domestic Network Controller, DNC (202);
(3) after the Home NodeB updates an operating software according to said latest software, the Home NodeB synchronizing with a time source, afterwards, the Home NodeB connecting to the allocated DNC, the DNC obtaining authentication information from the HCS, and obtaining service control information from the HCS after authenticating the Home NodeB according to said authentication information, and then allocating service resources which include transmission resource to the Home NodeB according to said service control information (203); and
(4) the Home NodeB detecting surrounding radio environment, obtaining surrounding radio environment information and reporting said information to the DNC, and the DNC configuring parameters for the Home NodeB according to said information (204);
**characterized in that** said allocating resources to the Home NodeB in the step (2) comprises: presetting multiple DNCs capable of providing services for the Home NodeB in the HCS, and setting a maximum load capacity and an alarming threshold for each DNC.

2. A method of claim 1, wherein ways of registering the Home NodeB in the step (1) is one of the following:
way 1: an operator configuring initialization data for the Home NodeB in the HCS, and said initialization data as the registration information being stored in the HCS;
way 2: the registration information being provided by a subscriber, and after said registration information being authenticated by the operator, the registration information being stored in the HCS;
wherein, the registration information comprises an equipment number and key of the Home NodeB.

3. A method of claim 1, wherein said allocating resources to the Home NodeB in the step (2) further comprises: if the HCS does not preset the DNC for the Home NodeB, then the HCS counting the number of Home NodeBs allocated to each DNC, and meanwhile obtaining from each DNC a load thereof, and finding a DNC whose load does not exceed the capacity and is minimum, and allocating said DNC to the Home NodeB.

4. A method of claim 3, wherein said allocating resources to the Home NodeB in the step (2) further comprises: if loads of all DNCs reach respective maximum capacities, then the HCS stopping allocating the DNCs and denying the Home NodeB accessing a service network.

5. A method of claim 1, wherein said resources in the step (2) further comprise a network element management system; and correspondingly,
the step (3) further comprises: the network element management system notifying the Home NodeB of an internet protocol address of the network element management system, and the Home NodeB notifying said network element management system of parameters of the Home NodeB, and said parameters comprising an equipment number and/or an internet protocol address of the Home NodeB.

6. A method of claim 1, wherein said surrounding radio environment information in the step (4) comprises a combination of any one or more of a scrambler, frequency point, signal strength and cell signal of an adjacent cell, and said parameters comprise a combination of any one or more of a frequency point, scrambler, power and information of an adjacent cell.

7. A method of claim 1, wherein the step (4) further comprises: the DNC reporting the configured parameters to the HCS.

8. A method of claim 1, further comprising the following step of:
(5) the HCS collecting and storing subscriber information of the Home NodeB.

9. A method of claim 8, wherein said subscriber information comprises an internet protocol address and/or macro-cell of the Home NodeB.

## Patentansprüche

1. Verfahren zur automatischen Installation eines Heimatknotens B, wobei das Verfahren die folgenden Schritte umfasst, dass:
(1) der Heimatknoten B bei einem Server zur Konfiguration von Heimatknoten B HCS registriert wird und der HCS Registrierungsinformationen des Heimatknotens B speichert (201);
(2) der Heimatknoten B nach dem Einschalten eine Konfiguration vom HCS anfordert, wobei der HCS dem Heimatknoten B Ressourcen zuteilt, nachdem er in Übereinstimmung mit den Registrierungsinformationen festgestellt hat, dass der Heimatknoten B autorisiert ist, und die Ressourcen eine aktuellste geeignete Software für den Heimatknoten B und einen Heimnetzwerkcontroller DNC umfassen (202);
(3) sich der Heimatknoten B mit einer Zeitquelle synchronisiert, nachdem der Heimatknoten B eine Betriebssoftware gemäß der aktuellsten Software aktualisiert hat, und sich der Heimatknoten B danach mit dem zugeteilten DNC verbindet, wobei der DNC Authentisierungsinformationen vom HCS erhält und Dienststeuerungsinformationen vom HCS nach dem Authentisieren des Heimatknotens B gemäß den Authentisierungsinformationen erhält und dann dem Heimatknoten B gemäß den Dienststeuerungsinformationen Dienstressourcen zuteilt, die eine Übertragungsressource umfassen (203); und
(4) der Heimatknoten B eine umgebende Funkumgebung detektiert, Informationen zur umgebenden Funkumgebung beschafft und diese Informationen an den DNC berichtet, und der DNC Parameter für den Heimatknoten B in Übereinstimmung mit diesen Informationen konfiguriert (204);
**dadurch gekennzeichnet, dass** das Zuteilen von Ressourcen an den Heimatknoten B im Schritt (2) umfasst, dass:
mehrere DNCs, die zum Bereitstellen von Diensten für den Heimatknoten B in dem HCS in der Lage sind, voreingestellt werden und für jeden DNC eine maximale Lastkapazität und eine Alarmschwelle eingestellt werden.

2. Verfahren nach Anspruch 1, wobei ein Weg zum Registrieren des Heimatknotens B im Schritt (1) einer der folgenden ist:
Weg 1: Ein Bediener konfiguriert Initialisierungsdaten für den Heimatknoten B im HCS und diese Initialisierungsdaten werden im HCS als die Registrierungsinformationen gespeichert;
Weg 2: Die Registrierungsinformationen werden von einem Abonnenten bereitgestellt und nachdem die Registrierungsinformationen von dem Bediener authentisiert wurden, werden die Registrierungsinformationen im HCS gespeichert;
wobei die Registrierungsinformationen eine Gerätenummer und einen Schlüssel des Heimatknotens B umfassen.

3. Verfahren nach Anspruch 1, wobei das Zuteilen von Ressourcen an den Heimatknoten B im Schritt (2) ferner umfasst, dass: dann, wenn der HCS den DNC für den Heimatknoten B nicht voreinstellt, der HCS die Anzahl der Heimatknoten B, die jedem DNC zugeteilt sind, zählt und in der Zwischenzeit von jedem DNC eine Belastung desselben beschafft und einen DNC sucht, dessen Belastung die Kapazität nicht überschreitet und minimal ist, und diesen DNC dem Heimatknoten B zuteilt.

4. Verfahren nach Anspruch 3, wobei das Zuteilen von Ressourcen an den Heimatknoten B im Schritt (2) ferner umfasst, dass: dann, wenn Belastungen von allen DNCs jeweilige Maximalkapazitäten erreichen, der HCS das Zuteilen der DNCs stoppt und verweigert, dass der Heimatknoten B auf ein Dienstnetzwerk zugreift.

5. Verfahren nach Anspruch 1, wobei die Ressourcen im Schritt (2) ferner ein Netzwerkelementmanagementsystem umfassen; und entsprechend
Schritt (3) ferner umfasst, dass: das
Netzwerkelementmanagementsystem den Heimatknoten B über eine Internet-Protokolladresse des Netzwerkelementmanagementsystems informiert und der Heimatknoten B das Netzwerkelementmanagementsystem über Parameter des Heimatknotens B informiert und die Parameter eine Gerätenummer und/oder eine Internetprotokolladresse des Heimatknotens B umfassen.

6. Verfahren nach Anspruch 1, wobei die Informationen zur umgebenden Funkumgebung im Schritt (4) eine Kombination aus einem oder mehreren beliebigen eines Verzerrers, eines Frequenzpunkts, der Signalstärke und des Zellensignals einer benachbarten Zelle umfasst und die Parameter eine Kombination aus einem oder mehreren beliebigen eines Frequenzpunkts, eines Verzerrers, der Leistung und Informationen einer benachbarten Zelle umfassen.

7. Verfahren nach Anspruch 1, wobei Schritt (4) ferner umfasst, dass:
der DNC die konfigurierten Parameter an den HCS meldet.

8. Verfahren nach Anspruch 1, das ferner den folgenden Schritt umfasst, dass:
(5) der HCS Abonnenteninformationen des Heimatknotens B sammelt und speichert.

9. Verfahren nach Anspruch 8, wobei die Abonnenteninformationen eine Internetprotokolladresse und/oder eine Makrozelle des Heimatknotens B umfassen.

## Revendications

1. Procédé d'installation automatique d'un noeud B domestique, le procédé comprenant les étapes suivante :
(1) l'enregistrement du noeud B domestique sur un serveur de configuration de noeud B (« Home NodeB Configuration Server »), HCS, et le stockage, par le HCS, d'informations d'enregistrement du noeud B domestique (201) ;
(2) après avoir été allumé, la demande, par le noeud B domestique, d'une configuration à partir du HCS, l'attribution, par le HCS, de ressources au noeud B domestique après avoir déterminé que le noeud B domestique est autorisé selon lesdites informations d'enregistrement, lesdites ressources comprenant un dernier logiciel approprié pour le noeud B domestique et un contrôleur de réseau domestique (« Domestic Network Controller »), DNC, (202) ;
(3) après que le noeud B domestique actualise un logiciel de fonctionnement selon ledit dernier logiciel, la synchronisation du noeud B domestique avec une source de synchronisation, suivie par la connexion du noeud B domestique au DNC attribué, et, par le DNC, l'obtention d'informations d'authentification à partir du HCS, et l'obtention d'informations de contrôle de service à partir du HCS après avoir authentifié le noeud B domestique selon lesdites informations d'authentification, et puis l'attribution de ressources de service qui comprennent une ressource de transmission au noeud B domestique selon lesdites informations de contrôle de service (203) ; et
(4) par le noeud B domestique, la détection d'un environnement radio, l'obtention d'informations d'environnement radio et le rapport, au DNC, desdites informations, et la configuration, par le DNC, de paramètres pour le noeud B domestique selon lesdites informations (204) ;
**caractérisé en ce que** ladite attribution de ressources au noeud B domestique dans l'étape (2) comprend : le préréglage de multiples DNCs capables de fournir des services pour le noeud B domestique dans le HCS, et le réglage d'une capacité de charge maximum et d'un seuil d'alarme pour chaque DNC.

2. Procédé selon la revendication 1, dans lequel des manières d'enregistrement du noeud B domestique dans l'étape (1) sont une des suivantes :
manière 1 : la configuration, par un opérateur, de données d'initialisation pour le noeud B domestique dans le HCS, et le stockage desdites données d'initialisation en tant qu'informations d'enregistrement dans le HCS ;
manière 2 : la fourniture, par un abonné, des informations d'enregistrement, et, après que lesdites informations d'enregistrement ont été authentifiées par l'opérateur, le stockage des informations d'enregistrement dans le HCS ;
dans lequel, les informations d'enregistrement comprennent un numéro d'équipement et une clef du noeud B domestique.

3. Procédé selon la revendication 1, dans lequel ladite attribution de ressources au noeud B domestique dans l'étape (2) comprend en outre : si le HCS ne prérègle pas le DNC pour le noeud B domestique, alors, par le HCS, le comptage du nombre de noeuds B domestiques attribués à chaque DNC, et, entretemps, l'obtention, à partir de chaque DNC, d'une charge de celui-ci, et le repérage d'un DNC dont la charge ne dépasse pas la capacité et est minimum, et l'attribution dudit DNC au noeud B domestique.

4. Procédé selon la revendication 3, dans lequel ladite attribution de ressources au noeud B domestique dans l'étape (2) comprend en outre : si des charges de tous les DNCs atteignent des capacités maximums respectives, alors, par le HCS, l'arrêt de l'attribution des DNCs et le refus, au noeud B, de l'accès à un réseau de service.

5. Procédé selon la revendication 1, dans lequel lesdites ressources dans l'étape (2) comprennent en outre un système de gestion d'élément de réseau ; et de façon correspondante,
l'étape (3) comprend en outre : la notification, par le système de gestion d'élément de réseau, au noeud B domestique, d'une adresse de protocole internet du système de gestion d'élément de réseau, et la notification, par le noeud B domestique, audit système de gestion d'élément de réseau, de paramètres du noeud B domestique, lesdits paramètres comprenant un numéro d'équipement et/ou une adresse de protocole internet du noeud B domestique.

6. Procédé selon la revendication 1, dans lequel lesdites informations d'environnement radio dans l'étape (4) comprennent une association d'un ou de plusieurs éléments quelconques parmi un embrouilleur, un point de fréquence, une intensité de signal et un signal de cellule d'une cellule adjacente, et lesdits paramètres comprennent une association d'un ou de plusieurs éléments quelconques parmi un point de fréquence, un embrouilleur, une puissance et des informations d'une cellule adjacente.

7. Procédé selon la revendication 1, dans lequel l'étape (4) comprend en outre : le rapport au HCS, par le DNC, des paramètres configurés.

8. Procédé selon la revendication 1, comprenant en outre l'étape suivante :
(5) la collecte et le stockage, par le HCS, d'informations d'abonné du noeud B domestique.

9. Procédé selon la revendication 8, dans lequel lesdites informations d'abonné comprennent une adresse de protocole internet et/ou une macro-cellule du noeud B domestique.
